# EUROPEAN PATENT SPECIFICATION

(11) **EP 0 797 550 B1**
(45) Date of publication and mention of the grant of the patent: **20.06.2001**
(21) Application number: 95940408.8
(22) Date of filing: 11.12.1995
(51) Int. Cl.: C03C 4/00, C03C 3/078

(54) **VITRIFIABLE MIXTURE FOR QUALITY GLASSES**
GLASBILDENDE ZUSAMMENSETZUNG FÜR GLAS MIT HOHER QUALITÄT
MELANGE VITRIFIABLE POUR VERRES DE QUALITE

(30) Priority: 13.12.1994 IT FI940223
(43) Date of publication of application: 01.10.1997
(73) Proprietor: C.A.L.P. Cristalleria Artistica La Piana S.P.A., 53034 Colle Val d'Elsa (IT)
(72) Inventor: BOSCHI, Giancarlo, I-53034 Colle Val d'Elsa (IT); PALOSCHI, Fabio, I-26100 Cremona (IT)
(74) Representative: Mannucci, Gianfranco, Dott.-Ing.
(86) International application number: PCT/IT95/00215
(87) International publication number: WO 96/18586

(56) References cited:
- EP-A- 0 553 586
- US-A- 4 098 596
- CHEMICAL ABSTRACTS, vol. 121, no. 12, 19 September 1994 Columbus, Ohio, US; abstract no. 140000, page 408; & JP,A,06 107 425 (OHARA KK) 19 April 1994

## Description

### Technical field

The present invention relates to the composition of a glass with the characteristics of lead crystal, but without the presence of lead.

### State of the art

Lead crystal is well known as a glass characterized in particular by exceptional brilliance, refractive index, density and sonority.

According to the definition given by EEC standard 69/493 - adopted in Italian Law No. 827 of 26/11/73, Annex b, columns e and f, line 2 - for a glass to be called "lead crystal" it must among other things, as well as containing at least 24% of lead, have a density greater than 2.90 g/cm³ and a refractive index greater than 1.545. These characteristics are ensured by the lead content, which also endows the glass with good workability, sonority and gloss.

The need to invent a new glass with the same characteristics as crystal arises from the fact that lead has already been banished from some production processes because of its potential toxicity and it is possible that this restriction will be extended in the near future.

For this reason alternatives have been investigated for obtaining glasses without lead but with the physical characteristics of "crystal" stated above. To achieve this, the lead can be replaced by a mixture of elements such as barium, zinc, calcium, strontium, bismuth, titanium, and others which are nontoxic and increase the values of density and refractive index. However, along with these properties, many of these elements have a high price and can impair the workability or the colour of the glass, so that their use can be unsuitable in industrial applications.

The researchers therefore endeavoured to determine the most favourable composition for obtaining lead-free "crystals" with characteristics suitable for both craft work and industrial processing, as for example the glass that is the subject of International Application WO 93/16964 in the name of Compagnie des Cristalleries de Baccarat, with the composition given in the following table.

This composition is characterized by replacement of the lead with a mixture of zinc, strontium and calcium, and the corresponding glass has a satisfactory density and refractive index, but it proves to be difficult to work, as it has a high melting point and softening point and a devitrification temperature that is unsuitable for continuous melting.

| Oxides | % by weight |
|---|---|
| SiO₂ | 53 - 58 |
| Li₂O | 0-0.3 |
| Na₂O | 4.5 - 7.5 |
| K₂O | 6 - 10 |
| SrO | 0 - 12 |
| BaO | |
| ZnO | 16 - 21 |
| SrO+CaO+ZnO | 26.5 - 31 |
| Al₂O₃ | 0 - 1.5 |
| Sb₂O₃ | 0.5 - 1.5 |
| TiO₂ | 0 - 2 |
| CaO | 0 - 9 |
| SnO₂ | 0 - 2.5 |
| B₂O₃ | 0 - 1.2 |
| La₂O₃ | 0 - 3 |

Another lead-free crystal is that envisaged in European Patent Application published under No. 0 594 422 A1 in the name of Toyo Glass Co. Ltd., with the composition according to the following table. According to this invention, the lead is replaced by a mixture of barium, zinc, titanium and boron, and the glass has satisfactory values of the physical parameters, in particular density and refractive index, at a reasonable cost.

| | |
|---|---|
| SiO₂ | 50.0 - 60.0 |
| CaO | 1.0 - 5.0 |
| BaO | 10.0 - 15.0 |
| Na₂O | 3.0 - 10.0 |
| K₂O | 5.0 - 13.0 |
| Li₂O | 0 - 1.0 |
| TiO₂ | 5.0 - 8.0 |
| ZnO | 5.0 - 10.0 |
| ZrO₂ | 0 - 2.0 |
| B₂O₃ | 1.0 - 2.0 |
| Sb₂O₃ | 0.3 - 0.8 |

However, glasses with the chemical composition given in this table can, because of the high titanium content, be difficult to decolorize and to work by hand.

### Disclosure of the invention

In order to overcome the drawbacks of the known lead-free glasses, in accordance with the present invention a composition for a vitrifiable mixture has been devised according to the following table:

**Table 1**

| | | | |
|---|---|---|---|
| SiO₂ | 50-58 | TiO₂ | 0-6 |
| K₂O | 0-13 | ZrO | 0-5 |
| Na₂O | 0-9 | Y₂O₃ | 0-5 |
| Li₂O | 0-4 | Al₂O₃ | 0-3 |
| CaO | 0-3 | SnO₂ | 0-5 |
| MgO | 0-4 | La₂O₃ | 0-9 |
| B₂O₃ | 0-2 | Nb₂O₅ | 0-9 |
| ZnO | 16-30 | Bi₂O₃ | 0-12 |
| BaO | 0-12 | GeO₂ | 0-5 |

In this composition lead is replaced by a mixture comprising mainly zinc, plus barium, lanthanum, niobium and bismuth, to give a total content of the oxides of the said elements that ranges from 26% to 33%. The sum of these oxides excluding zinc oxide must be between 7% and 14%, and furthermore it is possible to add zirconium, yttrium and titanium with a total combined content of their oxides of less than 6% for further improvement of the chemical resistance and refractive index of the glass.

Other features defining the mixture of oxides for formation of the glass according to the invention are:
- the fact that the total weight content of SiO₂ and Al₂O₃ is between 52% and 58% to guarantee sufficient chemical resistance;
- the fact that the total weight content of the oxides of potassium, sodium and lithium is between 12% and 18% to improve workability and fusibility;
- the fact that the molar ratio between potash (K₂O) and soda (Na₂O) is between 0.9 and 2 to ensure low transfers of heavy metal ions;
- the presence of oxides of arsenic, antimony, nickel, cobalt, manganese, erbium, neodymium, selenium, and cerium, as refining and decolorizing agents, in total quantity below 2%;
- the presence of alumina and of the oxides of calcium and magnesium in total quantity below 4%, to increase the hydrolysis resistance;
- the presence of tin and germanium in total amount by weight of up to 5%, to achieve the desired density and refractive index.

Within the framework of the possible compositions in the range stated above, the following are of particular interest:
A) a glass with composition in the range shown in Table 2 below:

**Table 2**

| | | | |
|---|---|---|---|
| SiO₂ | 53-57 | ZnO | 16-22 |
| K₂O | 7-12 | BaO | 7-12 |
| Na₂O | 3-6 | B₂O₃ | 0-1 |
| Li₂O | 0-2 | ZnO+BaO | 26-30 |
| K₂O+Na₂O+Li₂O | 12-17 | ZrO₂ | 0-3 |
| MgO | 0-2 | TiO₂+ZrO₂ | 0-6 |
| TiO₂ | 0-6 | Sb₂O₃ | 0-1 |

These values correspond to glasses with density and refractive index equal to or greater than the values stipulated by the aforementioned EEC standard, at a reasonable cost, and with good chemical resistance, for example the following glasses (Table 2/1), which can be used as substitutes for lead crystal:

**Table 2/1**

| | 1 | 2 | 3 | 4 |
|---|---|---|---|---|
| SiO₂ | 53.5-54.5 | 55.5-56.5 | 54.5-55.5 | 53.5-54.5 |
| K₂O | 7.5-8.5 | 8-9 | 7.5-8.5 | 10-11 |
| Na₂O | 4.5-5.5 | 4-5 | 4.5-5.5 | 5-6 |
| ZnO | 18-19 | 16.5-17.5 | 15.5-16.5 | 18.5-19.5 |
| BaO | 9.5-10.5 | 10.5-11.5 | 10.5-11.5 | 9.5-10.5 |
| Sb₂O₃ | 0.22-0.27 | 0.73-0.77 | 0.73-0.77 | 0.73-0.77 |
| TiO₂ | 3.5-4.5 | 1.5-2.5 | 3.5-4.5 | - |

More particularly, the next table (Table 2/2) gives the compositions and the measured values of some parameters of glasses with composition according to the fields defined by Table 2/1:

**Table 2/2**

| | 1 | 2 | 3 | 4 |
|---|---|---|---|---|
| SiO₂ | 54 | 56.25 | 55 | 54.15 |
| K₂O | 7.84 | 8.50 | 7.84 | 10.8 |
| Na₂O | 5.16 | 4.5 | 5.16 | 5.5 |
| ZnO | 18.5 | 17 | 16 | 18.8 |
| BaO | 10 | 11 | 11 | 10 |
| Sb₂O₃ | 0.25 | 0.75 | 0.75 | 0.75 |
| TiO₂ | 4.25 | 2 | 4.25 | - |
| K₂O+Na₂O+ Li₂O | 13 | 13.0 | 13 | 16.3 |
| ZnO+BaO | 28.5 | 28 | 27 | 28.8 |
| D.I.N. 12111 | 0.12 | 0.14 | 0.13 | 0.30 |
| d | 2.9575 | 2.9316 | 2.9441 | 2.938 |
| n_{d} | 1.5720 | 1.5570 | 1.5695 | 1.5510 |
| α | 91.8 | 90.5 | 89 | 103.0 |
| Abbe n° | 50.5 | 55.3 | 53.5 | 53 |
| Tg | 563 | 569 | 567 | 523 |
| Mg | 635 | 626 | 632 | 600 |

In this and subsequent tables, values are given for the various glasses, with notation as follows: "DIN 12111" is the value of the chemical resistance measured according to that standard; "d" is the density in kg/dm³ measured according to ASTM standard C729-75; "α" is the value of the coefficient of thermal expansion in °C⁻¹×10⁻⁶, according to UNI standard 7460 in the range 0-300; "Tg" is the glass transition temperature in °C; "Mg" is the softening temperature in °C; "Abbe No." is the value of the expression (n_{D}-1)/(n_{F}-n_{C}), the Abbe number being an index of optical dispersion, with low values of the index corresponding to increased dispersions.
B) a glass which, in comparison with the preceding one, has a lower quantity of barium and is of better quality - with equal or better physical parameters, such as sonority and dispersion - but a much higher cost, according to the following restricted range of composition (Table 3):

**Table 3**

| | | | |
|---|---|---|---|
| SiO₂ | 53-57 | TiO₂ | 0-6 |
| K₂O | 7-12 | Bi₂O₃ | 1-12 |
| Na₂O | 3-6 | Bi₂O₃+ZnO+BaO | 26-30 |
| Li₂O | 0-1 | Bi₂O₃+BaO | 7-14 |
| K₂O+Na₂O+Li₂O | 12-17 | B₂O₃ | 0-1 |
| Al₂O₃ | 0-1 | ZrO₂ | 0-2 |
| SiO₂+Al₂O₃ | 53-57 | Y₂O₃ | 0-1 |
| ZnO | 16-22 | TiO₂+Y₂O₃+ZrO₂ | 0-6 |
| BaO | 0-13 | Sb₂O₃ | 0-1 |

The next table (Table 3/1) shows two ranges of composition according to this last, restricted field:

**Table 3/1**

| | 5 | 6 |
|---|---|---|
| SiO₂ | 54.5-55.5 | 54.5-55.5 |
| K₂O | 10.5-11.5 | 10.5-11.5 |
| Na₂O | 5-6 | 5-6 |
| ZnO | 18.5-19.5 | 18.5-19.5 |
| BaO | 5.5-6.5 | - |
| Bi₂O₃ | 2.5-3.5 | 8.5-9.5 |
| Sb₂O₃ | 0.73-0.77 | 0.73-0.77 |

More particularly, Table 3/2 shown below gives the compositions and the measured values of some parameters of two glasses possessing compositions according to the ranges defined in Table 3/1:

**Table 3/2**

| | 5 | 6 |
|---|---|---|
| SiO₂ | 55.15 | 55.15 |
| K₂O | 10.8 | 10.8 |
| Na₂O | 5.5 | 5.5 |
| ZnO | 18.8 | 18.8 |
| BaO | 6 | - |
| Bi₂O₃ | 3 | 9 |
| Sb₂O₃ | 0.75 | 0.75 |
| K₂O+Na₂O+Li₂O | 16.3 | 16.3 |
| ZnO+BaO+Bi₂O₃+Nb₂O₅ | 27.8 | 27.8 |
| BaO+Bi₂O₃+Nb₂O₅ | 9 | 9 |
| SiO₂+Al₂O₃ | 55.15 | 55.15 |
| D.I.N. 12111 | 0.24 | 0.26 |
| d | 2,911 | 2,939 |
| n_{d} | 1.5495 | 1.5570 |
| α | 98.0 | 97.7 |
| n°Abbe | 55 | 52.5 |
| Tg | 528 | 529 |
| Mg | 617 | 609 |

It can be seen from the two examples given above that simply on replacing barium with bismuth there is an increase in optical dispersion.

Tests that have been carried out show that with suitable combinations of oxides it is possible to achieve values of the parameters that are comparable to those of lead crystal, benefiting from one or more of the following characteristics, depending on the circumstances: inexpensiveness of the product, workability, colour and optical dispersion. Moreover, the composition range stated is able to produce glasses with improved optical qualities, high density and considerable chemical resistance, without the use of potentially toxic or polluting elements; the specific subranges described above define compositions that are particularly interesting from the standpoint of industrial manufacture and/or of the market.

It is intended that the examples are given only as practical demonstrations of the invention, this invention being able to vary without, however, departing from the scope of the concept defined by the invention itself.

## Claims

1. A lead-free glass with density greater than 2.9 g/cm³ and refractive index greater than 1.545, characterized in that it has a percentage by weight of oxides in the ranges given in the following table:
| | | | |
|---|---|---|---|
| SiO₂ | 50-58 | TiO₂ | 0-6 |
| K₂O | 0-13 | La₂O₃ | 0-9 |
| Na₂O | 0-9 | Nb₂O₅ | 0-9 |
| Li₂O | 0-4 | Bi₂O₃ | 0-12 |
| K₂O+Na₂O+Li₂O | 12-18 | Bi₂O₃+ZnO+BaO+ La₂O₃+Nb₂O₅ | 26-33 |
| CaO | 0-3 | Bi₂O₃+BaO+La₂O₃+ Nb₂O₅ | 7-14 |
| MgO | 0-4 | GeO₂ | 0-5 |
| Al₂O₃ | 0-3 | B₂O3 | 0-2 |
| Al₂O₃+MgO+CaO | 0-4 | ZrO₂ | 0-5 |
| SiO₂+Al₂O₃ | 52-58 | Y₂O₃ | 0-5 |
| ZnO | 16-30 | SnO₂ | 0-5 |
| BaO | 0-12 | TiO₂+Y₂O₃+ZrO₂ | 0-6 |
the sum of the oxides of other minor elements, such as Ni, Mn, Nd, Er, Co, Sb, As, Se and Ce, remaining below 2% by weight, and that the molar ratio between K₂O and Na₂O is between 0.9 and 2.

2. A glass as in Claim 1, characterized in that it has the following chemical composition as percentages by weight:
| | | | |
|---|---|---|---|
| SiO₂ | 53-57 | ZnO | 16-22 |
| K₂O | 7-12 | BaO | 7-12 |
| Na₂O | 3-6 | B203 | 0-1 |
| Li₂O | 0-2 | ZnO+BaO | 26-30 |
| K₂O+Na₂O+Li₂O | 12-17 | ZrO₂ | 0-3 |
| MgO | 0-2 | TiO₂+ZrO₂ | 0-6 |
| TiO₂ | 0-6 | Sb₂O₃ | 0-1 |

3. A glass as in Claim 2, characterized in that it has a chemical composition within the following limits:
| | 1 | 2 | 3 | 4 |
|---|---|---|---|---|
| SiO₂ | 53.5-54.5 | 55.5-56.5 | 54.5-55.5 | 53.5-54.5 |
| K₂O | 7.5-8.5 | 8-9 | 7.5-8.5 | 10-11 |
| Na₂O | 4.5-5.5 | 4-5 | 4.5-5.5 | 5-6 |
| ZnO | 18-19 | 16.5-17.5 | 15.5-16.5 | 18.5-19.5 |
| BaO | 9.5-10.5 | 10.5-11.5 | 10.5-11.5 | 9.5-10.5 |
| Sb₂O₃ | 0.22-0.27 | 0.73-0.77 | 0.73-0.77 | 0.73-0.77 |
| TiO₂ | 3.5-4.5 | 1.5-2.5 | 3.5-4.5 | - |

4. A glass as in Claim 1, characterized in that its chemical composition as a percentage by weight is within the following restricted range:
| | | | |
|---|---|---|---|
| SiO₂ | 53-57 | TiO₂ | 0-6 |
| K₂O | 7-12 | Bi₂O₃ | 1-12 |
| Na₂O | 3-6 | Bi₂O₃+ZnO+BaO | 26-30 |
| Li₂O | 0-1 | Bi₂O₃+BaO | 7-14 |
| K₂O+Na₂O+Li₂O | 12-17 | B₂O₃ | 0-1 |
| Al₂O₃ | 0-1 | ZrO₂ | 0-2 |
| SiO₂+Al₂O₃ | 53-57 | Y₂O₃ | 0-1 |
| ZnO | 16-22 | TiO₂+Y₂O₃+ZrO₂ | 0-6 |
| BaO | 0-12 | Sb₂O₃ | 0-1 |

5. Glasses as in Claim 4, characterized in that they have the following values of chemical composition:
| | | |
|---|---|---|
| SiO₂ | 54.5-55.5 | 54.5-55.5 |
| K₂O | 10.5-11.5 | 10.5-11.5 |
| Na₂O | 5-6 | 5-6 |
| ZnO | 18.5-19.5 | 18.5-19.5 |
| BaO | 5.5-6.5 | - |
| Bi₂O₃ | 2.5-3.5 | 8.5-9.5 |
| Sb₂O₃ | 0.73-0.77 | 0.73-0.77 |

## Patentansprüche

1. Ein bleifreies Glas mit einer Dichte von mehr als 2,9 g/cm³ und einem Brechungsindex größer als 1,545, dadurch gekennzeichnet, daß es Gewichtsprozentanteile von Oxiden gemäß der in der folgenden Tabelle gegebenen Bereichen aufweist:
| | | | |
|---|---|---|---|
| SiO₂ | 50-58 | TiO₂ | 0-6 |
| K₂O | 0-13 | La₂O₃ | 0-9 |
| Na₂O | 0-9 | Nb₂O₅ | 0 - 9 |
| Li₂O | 0-4 | Bi₂O₃ | 0-12 |
| K₂O+Na₂O+Li₂O | 12-18 | Bi₂O₃+ZnO+BaO+ La₂O₃+Nb₂O₅ | 26-33 |
| CaO | 0-3 | Bi₂O₃+BaO+La₂O₃ + Nb₂O₅ | 7-14 |
| MgO | 0-4 | GeO₂ | 0-5 |
| Al₂O₃ | 0-3 | B₂O₃ | 0-2 |
| Al₂O₃+MgO+CaO | 0-4 | ZrO₂ | 0-5 |
| SiO₂+Al₂O₃ | 52-58 | Y₂O₃ | 0-5 |
| ZnO | 16-30 | SnO₂ | 0-5 |
| BaO | 0-12 | TiO₂+Y₂O₃+ZrO₂ | 0-6 |
daß die Summe der Oxide anderer, untergeordneter Elemente, wie Ni, Mn, Nd, Er, Co, Sb, As, Se und Ce unter 2% nach Gewicht bleibt, und daß das molare Verhältnis zwischen K₂O und Ma₂O zwischen 0,9 und 2 liegt.

2. Ein Glas nach Anspruch 1, dadurch gekennzeichnet, daß es folgende chemische Zusammensetzung nach Gewichtsprozenten aufweist:
| | | | |
|---|---|---|---|
| SiO₂ | 53-57 | ZnO | 16-22 |
| K₂O | 7-12 | BaO | 7-12 |
| Na₂O | 3-6 | B₂O₃ | 0-1 |
| Li₂O | 0-2 | ZnO+BaO | 26-30 |
| K₂O+Na₂O+Li₂O | 12-17 | ZrO₂ | 0-3 |
| MgO | 0-2 | TiO₂+ZrO₂ | 0-6 |
| TiO₂ | 0-6 | Sb₂O₃ | 0-1 |

3. Ein Glas nach Anspruch 2, dadurch gekennzeichnet, daß es eine chemische Zusammensetzung innerhalb folgender Grenzen aufweist:
| | 1 | 2 | 3 | 4 |
|---|---|---|---|---|
| SiO₂ | 53,5-54,5 | 55,5-56,5 | 54,5-55,5 | 53,5-54,5 |
| K₂O | 7,5-8,5 | 8-9 | 7,5-8,5 | 10-11 |
| Na₂O | 4,5-5,5 | 4-5 | 4,5-5,5 | 5-6 |
| ZnO | 18-19 | 16,5-17,5 | 15,5-16,5 | 18,5-19,5 |
| BaO | 9,5-10,5 | 10,5-11,5 | 10,5-11,5 | 9,5-10,5 |
| Sb₂O₃ | 0,22-0,27 | 0,73-0,77 | 0,73-0,77 | 0,73-0,77 |
| TiO₂ | 3,5-4,5 | 1,5-2,5 | 3,5-4,5 | - |

4. Ein Glas, nach Anspruch 1, dadurch gekennzeichnet, daß die chemische Zusammensetzung in Gewichtsprozenten in dem folgenden eingeschränkten Bereich liegt:
| | | | |
|---|---|---|---|
| SiO₂ | 53-57 | TiO₂ | 0-6 |
| K₂O | 7-12 | Bi₂O₃ | 1-12 |
| Na₂O | 3-6 | Bi₂O₃+ZnO+BaO | 26-30 |
| Li₂O | 0-1 | Bi₂O₃+BaO | 7-14 |
| K₂O+Na₂O+Li₂O | 12-17 | B₂O₃ | 0-1 |
| Al₂O₃ | 0-1 | ZrO₂ | 0-2 |
| SiO₂+Al₂O₃ | 53-57 | Y₂O₃ | 0-1 |
| ZnO | 16-22 | TiO₂+Y₂O₃+ZrO₂ | 0-6 |
| BaO | 0-12 | Sb₂O₃ | 0-1 |

5. Gläser nach Anspruch 4, dadurch gekennzeichnet, daß sie die folgenden Werte der chemischen Zusammensetzung aufweisen:
| | | |
|---|---|---|
| SiO₂ | 54,5-55,5 | 54,5-55,5 |
| K₂O | 10,5-11,5 | 10,5-11,5 |
| Na₂O | 5-6 | 5-6 |
| ZnO | 18,5-19,5 | 18,5-19,5 |
| BaO | 5,5-6,5 | - |
| Bi₂O₃ | 2,5-3,5 | 8,5-9,5 |
| Sb₂O₃ | 0,73-0,77 | 0,73-0,77 |

## Revendications

1. Un verre exempt de plomb avec une densité supérieure à 2,9 g/cm³ et un indice de réfraction supérieur à 1,545, caractérisé en ce qu'il a un pourcentage en poids d'oxydes dans les gammes indiquées dans le tableau ci-après :
| | | | |
|---|---|---|---|
| SiO₂ | 50-58 | TiO₂ | 0-6 |
| K₂O | 0-13 | La₂O₃ | 0-9 |
| Na₂O | 0-9 | Nb₂O₅ | 0-9 |
| Li₂O | 0-4 | Bi₂O₃ | 0-12 |
| K₂O+Na₂O+Li₂O | 12-18 | Bi₂O₃+ZnO+BaO+ La₂O₃+Nb₂O₅ | 26-33 |
| CaO | 0-3 | Bi₂O₃+BaO+La₂O₃+ Nb₂O₅ | 7-14 |
| MgO | 0-4 | GeO₂ | 0-5 |
| Al₂O₃ | 0-3 | B₂O₃ | 0-2 |
| Al₂O₃+MgO+CaO | 0-4 | ZrO₂ | 0-5 |
| SiO₂+Al₂O₃ | 52-58 | Y₂O₃ | 0-5 |
| ZnO | 16-30 | SnO₂ | 0-5 |
| BaO | 0-12 | TiO₂+Y₂O₃+ZrO₂ | 0-6 |
la somme des oxydes d'autres éléments mineurs comme Ni, Mn, Nd, Er, Co, Sb, As, Se et Ce restant inférieure à 2 % en poids et en ce que le rapport molaire entre K₂O et Na₂O se situe entre 0,9 et 2.

2. Un verre selon la revendication 1, caractérisé en ce qu'il a la composition chimique ci-après en pourcentages en poids :
| | | | |
|---|---|---|---|
| SiO₂ | 53-57 | ZnO | 16-22 |
| K₂O | 7-12 | BaO | 7-12 |
| Na₂O | 3-6 | B₂O₃ | 0-1 |
| Li₂O | 0-2 | ZnO+BaO | 26-30 |
| K₂O+Na₂O+Li₂O | 12-17 | ZrO₂ | 0-3 |
| MgO | 0-2 | TiO₂+ZrO₂ | 0-6 |
| TiO₂ | 0-6 | Sb₂O₃ | 0-1 |

3. Un verre selon la revendication 2, caractérisé en ce qu'il a une composition chimique dans les limites ci-après :
| | 1 | 2 | 3 | 4 |
|---|---|---|---|---|
| SiO₂ | 53,5-54,5 | 55,5-56,5 | 54,5-55,5 | 53,5-54,5 |
| K₂O | 7,5-8,5 | 8-9 | 7,5-8,5 | 10-11 |
| Na₂O | 4,5-5,5 | 4-5 | 4,5-5,5 | 5-6 |
| ZnO | 18-19 | 16,5-17,5 | 15,5-16,5 | 18,5-19,5 |
| BaO | 9,5-10,5 | 10,5-11,5 | 10,5-11,5 | 9,5-10,5 |
| Sb₂O₃ | 0,22-0,27 | 0,73-0,77 | 0,73-0,77 | 0,73-0,77 |
| TiO₂ | 3,5-4,5 | 1,5-2,5 | 3,5-4,5 | - |

4. Un verre selon la revendication 1, caractérisé en ce que sa composition chimique en pourcentage en poids se situe dans la qamme restreinte ci-après :
| | | | |
|---|---|---|---|
| SiO₂ | 53-57 | TiO₂ | 0-6 |
| K₂O | 7-12 | Bi₂O₃ | 1-12 |
| Na₂O | 3-6 | Bi₂O₃+ZnO+BaO | 26-30 |
| Li₂O | 0-1 | Bi₂O₃+BaO | 7-14 |
| K₂O+Na₂O+Li₂O | 12-17 | B₂O₃ | 0-1 |
| Al₂O₃ | 0-1 | ZrO₂ | 0-2 |
| SiO₂+Al₂O₃ | 53-57 | Y₂O₃ | 0-1 |
| ZnO | 16-22 | TiO₂+Y₂O₃+ZrO₂ | 0-6 |
| BaO | 0-12 | Sb₂O₃ | 0-1 |

5. Verres selon la revendication 4, caractérisés en ce qu'ils ont les valeurs ci-après de composition chimique :
| | | |
|---|---|---|
| SiO₂ | 54,5-55, 5 | 54,5-55, 5 |
| K₂O | 10,5-11,5 | 10,5-11,5 |
| Na₂O | 5-6 | 5-6 |
| ZnO | 18,5-19,5 | 18,5-19,5 |
| BaO | 5,5-6,5 | - |
| Bi₂O₃ | 2,5-3,5 | 8,5-9,5 |
| Sb₂O₃ | 0,73-0,77 | 0,73-0,77 |
